(19) **Europäisches Patentamt / European Patent Office / Office européen des brevets**

(11) **EP 4 331 380 A1**

(12) **EUROPEAN PATENT APPLICATION**
published in accordance with Art. 153(4) EPC

(43) Date of publication:
**06.03.2024 Bulletin 2024/10**

(21) Application number: **22796188.5**

(22) Date of filing: **28.04.2022**

(51) International Patent Classification (IPC):
*A23L 7/196* (2016.01)  *A23L 3/10* (2006.01)
*A23L 3/02* (2006.01)  *B65B 55/02* (2006.01)
*B65B 25/00* (2006.01)

(52) Cooperative Patent Classification (CPC):
**A23L 3/02; A23L 3/10; A23L 7/196; B65B 25/00; B65B 55/02**

(86) International application number:
**PCT/KR2022/006118**

(87) International publication number:
**WO 2022/231356 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.04.2021 KR 20210056075**

(71) Applicant: **CJ Cheiljedang Corporation**
**Seoul 04560 (KR)**

(72) Inventors:
• **OH, Ye Jin**
**Seoul 04560 (KR)**
• **JANG, Il Sang**
**Seoul 04560 (KR)**
• **KIM, Eun Hye**
**Seoul 04560 (KR)**
• **PARK, Hyeong Seon**
**Seoul 04560 (KR)**
• **JEONG, Hyo Young**
**Seoul 04560 (KR)**
• **CHOI, Hye Mi**
**Seoul 04560 (KR)**
• **JEONG, Sung Yoon**
**Seoul 04560 (KR)**
• **YOON, In Won**
**Seoul 04560 (KR)**

(74) Representative: **Handley, Matthew Edward et al**
**Venner Shipley LLP**
**200 Aldersgate**
**London EC1A 4HD (GB)**

(54) **INSTANT WHOLE-GRAIN RICE HAVING IMPROVED TASTE, NUTRITION AND TEXTURE**

(57)    The present application relates to an instant rice and, more particularly, to an instant whole-grain rice, wherein even when the instant rice is prepared using raw ingredients which are that are susceptible to microbial contamination or difficult to sterilize, the microorganisms in the final instant rice are lower than a standard value, and thus a sufficient sterilization effect can be exhibited, and deterioration of rice quality, which may be caused due to strict sterilization, may not occur, and thus instant rice with excellent texture and taste quality can be provided.

【Figure 1】

EP 4 331 380 A1

**Description**

[Technical Field]

The present application relates to an instant whole-grain rice.

[Background Art]

Cooked grains (Bap) is a staple food in East Asia including Korea, Japan and China, and is a type of food commonly eaten throughout Asia including Southeast Asia and South Asia. In recent years, the number of people consuming the Bap has increased not only in Asia but also in Western countries, and the Bap has now become a popular food even in Western countries. In particular, rice, a main raw ingredient of the Bap, is becoming more popular as it is known that the rice is nutritionally excellent.

Generally, Bap may be cooked and prepared by washing grains such as rice in water, soaking the grains, then removing water and heating the grains. However, in order to cook rice properly, it is important to accurately measure and use the amount of water according to the amount of grains, and depending on heating conditions and methods, the final taste or texture of Bap may vary greatly, and thus skilled skill or experience is required to make Bap above a certain level. Since it is not easy to cook the consistent and high-quality Bap, electric rice cookers have been developed only for the purpose of cooking Bap. Since the Bap is a type of food eaten as a staple food, the Bap needs to be cooked every day or in large quantities, but has a disadvantage that the cooking process is cumbersome and not easy. In particular, with the recent trend of increasing single-person households and developing dining culture, the number of people who want to cook and eat the Bap at home through the cumbersome process is decreasing, and on the contrary, the demand for an instant rice in the form of instant food is increasing.

The instant rice is sold as cooked rice in a package, and thus there is an advantage that consumers who purchase the instant foo may eat the instant food right away, and easily enjoy high-quality Bap through a simple cooking process using a microwave, etc. However, in instant foods that are distributed for a long period of time and stored at room temperature, there is a high need to control microbial contamination through sufficient sterilization. If excessive sterilization conditions are applied to sterilize instant rice, the quality of Bap may be damaged and deteriorated. Therefore, it is an important problem to solve in the field of instant rice to achieve a sterilization effect while maintaining the quality of Bap.

The solving of the above problems becomes more important in instant rice, which uses more raw ingredients other than white rice even in the instant rice. When using raw ingredients that contain a lot of moisture or are susceptible to microbial contamination, sterilization is difficult and quality deterioration due to sterilization is noticeable, so that the need for sterilization and quality control is particularly emerging. In the case of a mixed rice in the form of the instant rice on the market, since raw ingredients vulnerable to microbial contamination are use, even if the sterilization conditions are satisfied, the quality of Bap is significantly reduced to have poor texture and taste in many cases. Korean Laid-open Patent Publication No. 10-2015-0105819 discloses a method for preparing sterile packaged instant flavored glutinous rice containing nuts, and a method of first cooking flavored glutinous rice by mixing raw ingredients, and then heating the rice to high temperature to sterilize and package the rice, and thus, it discloses only a method without considering a problem of deterioration of Bap quality due to sterilization at all. Recently, the convenience food market is gradually increasing, and as the demand for various types of the instant food in addition to the existing white rice Bap increases, a demand for the instant food having similar quality to food cooked at home or in restaurants and a need for development thereof are also increasing.

[Prior Art Document]

[Patent Document]

(Patent Document 1) Korean Laid-open Patent Publication No. 10-2015-0105819

[Disclosure]

[Technical Problem]

The present application relates to instant rice prepared using raw ingredients that are prone to microbial contamination and difficult to sterilize, and an object of the present application is to provide an instant rice having excellent quality with improved taste, nutrition, texture, etc. of hot pot rice even while having less microorganisms than a threshold through sufficient sterilization.

[Technical Solution]

An aspect of the present application provides an instant rice including a sealed container; and a multi-grain rice made from mixed grains contained in the container, wherein the mixed grains include one or more selected from the group consisting of brown rice, black rice, whole wheat, oats, barley, beans, red beans, foxtail millet, and sorghum, the multi-grain rice is contained in an amount of 90 parts by weight or more based on 100 parts by weight of the contents contained in the container, and the number of microorganisms in the instant rice is negative within a shelf life.

Hereinafter, the present application will be described in detail.

The term "cooked grains (Bap)" used herein refers to all foods prepared by adding water to grains, pressurizing, and heating the grains. When compared to porridge, the Bap is maintained in the form of grains, characterized to be chewed and eaten, and has a feature of having less moisture than porridge. The Bap may be commonly taken as a staple food in East Asia including Korea and Southeast Asia, and mainly prepared using rice, but may be prepared with other grains instead of rice, or prepared by mixing rice with other grains, or may be prepared using additional ingredients other than grains.

The term "instant rice" used herein means Bap made in the form of an instant food. The instant rice is a processed food that is able to be eaten in itself without a separate cooking process, or eaten through a simpler cooking process than a conventional method of preparing and cooking Bap, and prepared for convenient storage, reposition, transportation, and portability.

The instant rice of the present application includes a sealed container; and a multi-grain rice made from mixed grains contained in the container, wherein the mixed grains include one or more selected from the group consisting of brown rice, black rice, whole wheat, oats, barley, beans, red beans, foxtail millet, and sorghum, the multi-grain rice is contained in an amount of 90 parts by weight or more based on 100 parts by weight of the contents contained in the container, and the number of microorganisms in the instant rice is negative within a shelf life.

Although the instant rice of the present application is in the form of instant rice, the instant rice may exhibit excellent quality that embodied the taste, nutrition, texture, etc. of hot pot rice. The hot pot rice refers to rice cooked using a pot, and specifically, may be rice cooked in a pressure rice pot or an iron pot, particularly a stone pot, an iron pot such as a cast iron pot, etc., to embody more improved texture.

The instant rice of the present application may be in the form of an instant whole-grain rice.

The instant rice may further include raw ingredients commonly used when preparing whole grain rice in addition to the mixed grains listed above.

The mixed grains include one or more, two or more, three or more, or four or more selected from the group consisting of brown rice, black rice, whole wheat, oats, barley, beans, red beans, foxtail millet and sorghum, and more specifically, may include brown rice and black rice, or whole wheat and oats. More specifically, the mixed grains may include brown rice, black rice, whole wheat, oats, barley, beans, red beans, foxtail millet, and sorghum other than white rice.

The mixed grains may include both brown rice and black rice. The brown rice may be at least one selected from the group consisting of non-glutinous brown rice and glutinous brown rice.

When the mixed grains include at least one selected from the group consisting of whole wheat and oats, the whole wheat or oats with burst surfaces among the whole wheat or oats may be contained in an amount of 10 parts by weight or less, 9 wt% or less, 8 wt% or less, 7 wt% or less, 6 wt% or less, or 5 wt% or less based on 100 parts by weight of the entire whole wheat or oats. In the present application, the term "burst surface" may be defined as exposing 10% or more of the endosperm portion of a grain based on the entire surface area of the grain. In other words, in the instant rice of the present application, among the whole wheat or oat grains included therein, the endosperm portions thereof are exposed to be less than 10% of the surface area of each grain, so that the burst whole wheat or oat grains may be 10% or less, 9% or less, 8% or less, 7% or less, 6% or less, or 5% or less of the entire whole wheat or oat grains. Instant whole-grain rice, which is available on the market, needs to pay special attention to microorganism control and sterilization, and to this end, when sterilizing the instant rice under strict sterilization conditions, surface bursting may occur in grains such as whole wheat and oats where the rice grains are prone to bursting. If the surfaces of the grains burst, the appearance may not look good to the eye, which may reduce the preference of the appearance, and physical properties related to texture, including hardness, may also decrease, resulting in a decrease in the quality of instant rice. However, although the instant rice of the present application contains grains that may cause surface bursting, the instant rice has excellent texture and appearance quality due to a high proportion of grains with unburst surfaces, and even though the quality is not damaged, the number of microorganisms in instant rice is measured to be negative within a shelter life and the number of microorganisms may be 0 CFU/ml, so that there is an effect that sterilization of microorganisms has been sufficiently performed.

The mixed grains included in the instant rice of the present application are susceptible to microbial contamination because the number of microorganisms contained therein is greater than the number of microorganisms contained in other grains, or may not sufficiently sterilized through a conventional sterilization process. Specifically, the mixed grains may have the number of microorganisms of $10^2$ cfu/ml to $10^8$ cfu/ml in the mixed grains before sterilization, and for example, the number of microorganisms may be in the range of $10^3$ cfu/ml to $10^7$ cfu/ml, 1,500 cfu/ml to 5,000,000 cfu/ml or 1,800 cfu/ml to 4,500,000 cfu/ml. In addition, the number of microorganisms in the mixed grains before sterilization may be the number of microorganisms measured before sterilizing a mixture of two or more grains. The number of microorganisms in a mixture of the mixed grains before sterilization may be $10^5$ cfu/ml to $10^8$ cfu/ml, and for example, the number of microorganisms in the mixture of the mixed grains before sterilization may be 500,000 cfu/ml to 5,000,000 cfu/ml or 550,000 cfu/ml to 1,200,000 cfu/ml. Accordingly, when considering an effect on the health of people who eat instant rice and a legal acceptable level of the number of microorganisms in instant rice, in order to meet the standard by reducing the number of microorganisms contained in instant rice prepared using the mixed grains, stricter sterilization may be required than when using other grains. However, when the instant rice is prepared through strict sterilization conditions and sterilization methods, microbial contamination may be controlled, but there is a problem that the quality of instant rice may decrease due to the sterilization process. The present application is an invention intended to solve the problems that occur when preparing the instant rice using the mixed grains, and the instant rice of the present application has an effect of not deteriorating the quality of the instant rice even while exhibiting a sufficient sterilization effect.

The multi-grain rice prepared with the mixed grains may be included in an amount of 90 parts by weight or more based on 100 parts by weight of the contents contained in the container. Specifically, the content of the multi-grain rice may be 90 parts by weight or more, 91 parts by weight or more, 92 parts by weight or more, 93 parts by weight or more, 94 parts by weight or more, 95 parts by weight or more, 96 parts by weight or more, 97 parts by weight or more, 98 parts by weight, 99 parts by weight or more, 99.5 parts by weight or more, 99.9 parts by weight or more, 100 parts by weight, 90 parts by weight to 99.9 parts by weight, 90 parts by weight to 99.5 parts by weight, 90 parts by weight to 99 parts by weight, 91 parts by weight to 99 parts by weight, 92 parts by weight to 99 parts by weight, 93 parts by weight to 99 parts by weight, 94 parts by weight to 99 parts by weight, 95 parts by weight to 99 parts by weight, 96 parts by weight to 99 parts by weight, 97 parts by weight to 99 parts by weight, 98 parts by weight to 99 parts by weight, 90 parts by weight to 98 parts by weight, 91 parts by weight to 98 parts by weight, 92 parts by weight to 98 parts by weight, 93 parts by weight to 98 parts by weight, 94 parts by weight to 98 parts by weight, 95 parts by weight to 98 parts by weight, 96 parts by weight parts by weight to 98 parts by weight, or 97 parts by weight to 98 parts by weight, but is not limited thereto. The multi-grain rice may be prepared using only mixed grains other than white rice.

The brown rice may be included in an amount of 30 to 70 parts by weight based on 100 parts by weight of the contents contained in the container. Specifically, the content of the brown rice may be in the range consisting of a lower limit selected from 30 parts by weight, 31 parts by weight, 32 parts by weight, 33 parts by weight, 34 parts by weight, 35 parts by weight, 36 parts by weight, 37 parts by weight, 38 parts by weight, 39 parts by weight, and 40 parts by weight and/or an upper limit selected from 70 parts by weight, 69 parts by weight, 68 parts by weight, 67 parts by weight, 66 parts by weight, 65 parts by weight, 64 parts by weight, 63 parts by weight, 62 parts by weight, 61 parts by weight and 60 parts by weight. For example, the content of the brown rice may be 30 to 70 parts by weight, 31 to 69 parts by weight, 32 to 68 parts by weight, 35 to 65 parts by weight, 37 to 63 parts by weight, 38 to 62 parts by weight, or 40 to 60 parts by weight, but is limited thereto. More specifically, non-glutinous brown rice may be included in an amount of 10 to 30 parts by weight, 11 to 29 parts by weight, 12 to 28 parts by weight, 15 to 25 parts by weight, 17 to 23 parts by weight, or 19 to 19 parts by weight, based on 100 parts by weight of the contents contained in the container, but is not limited thereto. In addition, glutinous brown rice may be included in an amount of 20 to 40 parts by weight, 21 to 39 parts by weight, 22 to 38 parts by weight, 25 to 35 parts by weight, 27 to 33 parts by weight, or 29 to 31 parts by weight based on 100 parts by weight of the contents contained in the container, but is not limited thereto.

The black rice may be included in an amount of 5 to 15 parts by weight based on 100 parts by weight of the contents contained in the container. Specifically, the content of the black rice may be in the range consisting of a lower limit selected from 5 parts by weight, 5.5 parts by weight, 6 parts by weight, 6.5 parts by weight, 7 parts by weight, 7.5 parts by weight, 8 parts by weight, 8.5 parts by weight, 9 parts by weight, 9.5 parts by weight, and 10 parts by weight and/or an upper limit selected from 15 parts by weight, 14.5 parts by weight, 14 parts by weight, 13.5 parts by weight, 13 parts by weight, 12.5 parts by weight, 12 parts by weight, 11.5 parts by weight, 11 parts by weight, 10.5 parts by weight and 10 parts by weight. For example, the content of the black rice may be 5 to 15 parts by weight, 6 to 14 parts by weight, 7 to 13 parts by weight, 8 to 12 parts by weight, 9 to 11 parts by weight, 9 to 10 parts by weight, or 10 to 11 parts by weight, but is not limited thereto.

At least one selected from the group consisting of the whole wheat and barley may be included in an amount of 5 to 15 parts by weight based on 100 parts by weight of the contents contained in the container. Specifically, the content of at least one selected from the group consisting of the whole wheat and barley may be in the range consisting of a lower limit selected from 5 parts by weight, 5.5 parts by weight, 6 parts by weight, 6.5 parts by weight, 7 parts by weight, 7.5 parts by weight, 8 parts by weight, 8.5 parts by weight, 9 parts by weight, 9.5 parts by weight, and 10 parts by weight and/or an upper limit selected from 15 parts by weight, 14.5 parts by weight, 14 parts by weight, 13.5 parts by weight, 13 parts by weight, 12.5 parts by weight, 12 parts by weight, 11.5 parts by weight, 11 parts by weight, 10.5 parts by weight and 10 parts by weight. For example, the content of at least one selected from the group consisting of the whole wheat and barley may be 5 to 15 parts by weight, 6 to 14 parts by weight, 7 to 13 parts by weight, 8 to 12 parts by weight, 9 to 11 parts by weight, 9 to 10 parts by weight, or 10 to 11 parts by weight, but is not limited thereto. In particular, the whole wheat or barley are raw ingredients that are difficult to maintain the quality thereof while satisfying microbial negative requirements within the shelf life, but in the present application, the whole wheat or barley may be included in an amount of 5 to 15 parts by weight based on 100 parts by weight of the contents included in the instant rice to maintain quality.

The non-glutinous brown rice may be added in an amount of 5 parts by weight to 12 parts by weight based on 100 parts by weight of the contents when preparing the instant rice of the present application. Specifically, the content of the non-glutinous brown rice may be in the range consisting of a lower limit selected from 5 parts by weight, 5.5 parts by weight, 6 parts by weight, 6.5 parts by weight, 7 parts by weight, 7.5 parts by weight, and 8 parts by weight, and/or an upper limit selected from 12 parts by weight, 11.5 parts by weight, 11 parts by weight, 10.5 parts by weight, 10 parts by weight, 9.5 parts by weight, 9 parts by weight, and 8.5 parts by weight. For example, the content of the non-glutinous brown rice may be 5 to 12 parts by weight, 6 to 11 parts by weight, 7 to 10 parts by weight, 7.5 to 9 parts by weight, 8 to 9 parts by weight, or 8 to 8.5 parts by weight, but is not limited thereto. The glutinous brown rice may be added in a content of 10 parts by weight to 20 parts by weight based on 100 parts by weight of the contents when preparing the instant rice of the present application. Specifically, the content of the glutinous brown rice may be in the range consisting of a lower limit selected from 10 parts by weight, 10.5 parts by weight, 11 parts by weight, 11.5 parts by weight, 12 parts by weight, 12.5 parts by weight, 13 parts by weight, 13.5 parts by weight, and 14 parts by weight and/or an upper limit selected from 20 parts by weight, 19.5 parts by weight, 19 parts by weight, 18.5 parts by weight, 18 parts by weight, 17.5 parts by weight, 17 parts by weight, 16.5 parts by weight, 16 parts by weight, 15.5 parts by weight, 15 parts by weight, and 14.5 parts by weight. For example, the content of the glutinous brown rice may be 10 to 20 parts by weight, 11 to 19 parts by weight, 12 to 18 parts by weight, 13 to 17 parts by weight, 13.5 to 16 parts by weight, 14 to 15 parts by weight, or 14 to 14.5 parts by weight, but is not limited thereto.

The black rice may be added in a content of 3 parts by weight to 10 parts by weight based on 100 parts by weight of the contents when preparing the instant rice of the present application. Specifically, the content of the black rice may be in the range consisting of a lower limit selected from 3 parts by weight, 3.5 parts by weight, 4 parts by weight, 4.5 parts by weight, 5 parts by weight, 5.5 parts by weight, and 6 parts by weight, and/or an upper limit selected from 10 parts by weight, 9.5 parts by weight, 9 parts by weight, 8.5 parts by weight, 8 parts by weight, 7.5 parts by weight, 7 parts by weight, and 6.5 parts by weight. For example, the content of the black rice may be 3 to 10 parts by weight, 3.5 to 9.5 parts by weight, 4 to 9 parts by weight, 4.5 to 8.5 parts by weight, 5 to 8 parts by weight, 5.5 to 7.5 parts by weight, 5.5 to 7 parts by weight, or 6 to 6.5 parts by weight, but is not limited thereto.

The whole wheat may be added in a content of 3 parts by weight to 10 parts by weight based on 100 parts by weight of the contents when preparing the instant rice of the present application. Specifically, the content of the whole wheat may be in the range consisting of a lower limit selected from 3 parts by weight, 3.5 parts by weight, 4 parts by weight, 4.5 parts by weight, 5 parts by weight, 5.5 parts by weight, and 6 parts by weight, and/or an upper limit selected from 10 parts by weight, 9.5 parts by weight, 9 parts by weight, 8.5 parts by weight, 8 parts by weight, 7.5 parts by weight, 7 parts by weight, and 6.5 parts by weight. For example, the content of the whole wheat may be 3 to 10 parts by weight, 3.5 to 9.5 parts by weight, 4 to 9 parts by weight, 4.5 to 8.5 parts by weight, 5 to 8 parts by weight, 5.5 to 7.5 parts by weight, 5.5 to 7 parts by weight, or 6 to 6.5 parts by weight, but is not limited thereto.

The oats may be added in a content of 3 parts by weight to 10 parts by weight based on 100 parts by weight of the contents when preparing the instant rice of the present application. Specifically, the content of the oats may be in the range consisting of a lower limit selected from 3 parts by weight, 3.5 parts by weight, 4 parts by weight, 4.5 parts by weight, 5 parts by weight, 5.5 parts by weight, and 6 parts by weight, and/or an upper limit selected from 10 parts by weight, 9.5 parts by weight, 9 parts by weight, 8.5 parts by weight, 8 parts by weight, 7.5 parts by weight, 7 parts by weight, and 6.5 parts by weight. For example, the content of the oats may be 3 to 10 parts by weight, 3.5 to 9.5 parts by weight, 4 to 9 parts by weight, 4.5 to 8.5 parts by weight, 5 to 8 parts by weight, 5.5 to 7.5 parts by weight, 5.5 to 7 parts by weight, or 6 to 6.5 parts by weight, but is not limited thereto.

The instant rice of the present application may include dietary fibers in an amount of 3 parts by weight to 7 parts by weight based on 100 parts by weight of the contents included in the container. Specifically, the content of the dietary fibers may be in the range consisting of a lower limit selected from 3 parts, 3.2 parts, 3.5 parts, 3.7 parts, 4 parts, 4.2 parts and 4.5 parts by weight, and/or an upper limit selected from 7 parts, 6.8 parts, 6.5 parts, 6.3 parts by weight, 6 parts by weight, 5.8 parts by weight, 5.5 parts by weight, 5.3 parts by weight, and 5 parts by weight. For example, the content of the dietary fibers may be 3 to 7 parts by weight, 3.5 to 6.5 parts by weight, 4 to 6 parts by weight, 4.2 to 5.8 parts by weight, or 4.5 to 5.5 parts by weight, but is not limited thereto.

The instant rice of the present application may include proteins in an amount of 3.5 parts by weight to 10 parts by weight based on 100 parts by weight of the contents included in the content. Specifically, the content of the proteins may be in the range consisting of a lower limit selected from 3.5 parts by weight, 4 parts by weight, 4.5 parts by weight, 5 parts by weight, 5.5 parts by weight, 6 parts by weight, and 6.5 parts by weight, and/or an upper limit selected from 10 parts by weight, 9.5 parts by weight, 9 parts by weight, 8.5 parts by weight, 8 parts by weight, 7.5 parts by weight, 7 parts by weight, and 6.5 parts by weight. For example, the content of the proteins may be 3.5 to 10 parts by weight, 4 to 9.5 parts by weight, 4.5 to 9 parts by weight, 5 to 8.8 parts by weight, or 5.5 to 8 parts by weight, but is not limited thereto.

The instant rice of the present application may further include water or sauces. The sauces are liquid sauces and may be used without limitation as long as the liquid sauces are liquid sauces to be added to impart characteristics such as taste, shape, and physical properties to be implemented in the instant rice of the present application, and specifically, may contain sugars and/or salts. The liquid sauces may be prepared by mixing liquid raw ingredients and/or powdered raw ingredients at a predetermined ratio, and the liquid raw ingredients may be soy sauce, vegetable/animal ingredient concentrate, fruit and vegetable paste, honey, oligosaccharide, starch syrup, etc., but are not limited thereto, and the powdered raw ingredients may be salt, sugar, pepper, red pepper powder, etc., but are not limited thereto. For example, the sauces may include soy sauce, garlic, green onions, sugar, salt, sesame oil, honey, or combinations thereof. When the liquid sauces are added in the preparation of instant rice, there is a problem that the quality of the liquid sauces may significantly deteriorate during the process of sterilizing the instant rice using a conventional method. However, although the instant rice of the present application contains the liquid sauces, the quality of the instant rice, including the sauces, is not deteriorated and the number of microorganisms in the instant rice and/or the sauces may be maintained at 0 CFU/ml.

The instant rice may be negative during bacteria growth test for microorganisms, more specifically general bacteria and heat-resistant bacteria, within the shelf life. Alternatively, the instant rice may be sterile for microorganisms, more specifically general bacteria and heat-resistant bacteria, within the shelf life. Alternatively, the instant rice may have 0 cfu/ml of microorganisms, more specifically general bacteria and heat-resistant bacteria, within the shelf life. In addition, the number of microorganisms in the instant rice may be 0 CFU/ml when measured at 9 months or less after the preparation of instant rice, and specifically, the number of microorganisms measured at 1 month or less, 2 months or less, 3 months or less, 6 months or less, or 9 months or less after the preparation may be 0 CFU/ml.

The number of microorganisms in the instant rice, water and/or sauces may be 0 cfu/ml. In the grains, water, and/or sauces included in the instant rice of the present application, all general bacteria and heat-resistant bacteria are all killed so that the number of microorganisms may be 0 cfu/ml. Accordingly, the instant rice of the present application has an advantage of exhibiting a sufficient sterilization effect without deteriorating the quality of the grains, water and/or sauces included in the instant rice.

The chromaticity of the grains in the instant rice measured after heating the instant rice of the present application in a 700 W microwave for 1 minute to 3 minutes, 1 minute 30 seconds to 2 minutes 30 seconds, more specifically 2 minutes, may have L value of 20 to 25, a value of 4 to 7, and b value of 3 to 5.5. Specifically, the L value may be 20 to 25, 21 to 24.5, or 22 to 23, the a value may be 4 to 7, 4.5 to 6.5, or 5 to 6, and the b value may be 3 to 5.5, 3.5 to 5, or 4 to 4.5. As the chromaticity of grains in the instant rice of the present application corresponds to the above range, it is possible to provide instant rice with a color that better matches the color preference of consumers. In the field of food technology to which the present application pertains, the color of food corresponds to a factor that plays an important role in consumer's preference and choice along with taste quality.

The instant rice of the present application may have one or more of the following physical properties obtained by measuring the multi-grain rice included in the container using a physical property analyzer, after heating the instant rice in a 700 W microwave for 1 minute to 3 minutes and 1 minute 30 seconds to 2 minutes 30 seconds, more specifically for 2 minutes: (i) hardness of 25 to 35; (ii) elasticity of 33 to 38; (iii) adhesiveness of 29.5 to 31; and (iv) glutinousness of 23.3 to 25.

Specifically, the instant rice of the present application may have one or more of the following physical properties obtained by measuring the multi-grain rice included in the container using a physical property analyzer, after heating the instant rice in a 700 W microwave for 1 minute to 3 minutes and 1 minute 30 seconds to 2 minutes 30 seconds, more specifically for 2 minutes: (i) hardness of 25 to 35; (ii) elasticity of 33 to 38; (iii) adhesiveness of 29.5 to 31; and (iv) glutinousness of 23.3 to 25.

More specifically, the physical properties are measured using a physical property analyzer (Tensipresser Analyzer, MyBoy, TAKETOMO Electric Incorporated). Specifically, in order to measure the physical properties, a texture profile analysis (TPA) is performed using a physical property analyzer, and a TPA curve obtained after 6 bites is used. Specifically, each sample is placed in a holder of a physical property analyzer, and a 30 mm-high plunger moves at a constant force and speed of 2.0 mm/s to apply the force to the sample surface. The load applied to the plunger is measured by continuously applying vertically 240 compression two times, 46% compression two times and 92% compression two times of the sample thickness. The hardness is measured by a peak value when the plunger applies 92% compression of the sample thickness, which represents the force required to chew and crush the Bap. The elasticity is measured by dividing a curve area at 92% compression into a curve area at 240 compression, and means that the higher the elasticity value, the higher the chewed elasticity of the Bap. The adhesiveness may be measured as a negative peak value when the plunger applies 92% compression to the sample, which represents the force at the moment of removing the plunger stuck to the sample, and means that the larger the measured value, the higher the adhesiveness. The glutinousness may be measured as a negative area when the plunger applies 92% compression to the sample, which represents a sustained sticking force. Each value was repeatedly measured 5 times, and then the average values thereof are calculated.

Specifically, the hardness may be 25 to 35, 26 to 30, or 27 to 30, the elasticity may be 33 to 38, 34 to 37, or 34 to 36, the adhesiveness may be 29.5 to 31, 29.7 to 30.5 or 29.7 to 30, and the glutinousness may be 23.3 to 25, 23.4 to 24.5 or 23.5 to 24. As the instant rice of the present application exhibits the hardness in the above range, the hardness of the grains is relatively maintained to have excellent texture although microorganisms are completely controlled through strict sterilization.

The sugar content of the sauces for sterilization may be 0 to 60 brix. Specifically, the sugar content of the liquid sauces may be the sugar content in the range consisting of a lower limit selected from 0, 5, 10, 15, 20, 25 and 30 brix and/or an upper limit selected from 60, 55, 50, 45, 40, 35 and 30 brix. For example, the sugar content may be 0 to 60 brix, 5 to 55 brix, 10 to 50 brix, 15 to 45 brix, 20 to 40 brix, 25 to 35 brix, 30 to 35 brix, or 35 to 40 brix, but is limited thereto.

The viscosity of the sauces before sterilization may be 0 to 2,000 cp. Specifically, the viscosity of the sauces may be the viscosity in the range consisting of a lower limit selected from 0, 10, 100, 200, 300, 400, 500, 600, 700, 800, 900, and 1000 cp and/or an upper limit selected from 2,000, 1,900, 1,800, 1,700, 1,600, 1,500, 1,400, 1,300, 1,200, 1,100, and 1,000 cp. For example, the viscosity may be 0 to 2,000 cp, 100 to 1,900 cp, 200 to 1,800 cp, 300 to 1,700 cp, 400 to 1,600 cp, 500 to 1,500 cp, 600 to 1,400 cp, 700 to 1,300 cp, 800 to 1,200 cp p, 900 to 1,100 cp, 1,000 to 1,100 cp or 900 to 1,000 cp, but is not limited thereto.

When the sauces have the sugar content and/or viscosity in the above range, heat transfer may be difficult during the sterilization process, thereby making it difficult to control microorganisms. However, the instant food of the present application may exhibit a sufficient sterilization effect even while maintaining the sugar content and/or viscosity range of the sauces. In addition, although the sterilization effect of viscous liquids is not large by a general liquid sterilization method, the instant rice of the present application has an advantage of exhibiting a sufficient sterilization effect of the viscous sauces as described above.

The sealed container may be prepared by attaching a sterilized lid material, for example, a UV sterilized lid material, to the container, and may further include injecting inert gas into the container before sealing. The attaching of the container may be performed using heat, an adhesive, or pressure, but is not limited thereto. The container and the lid material may be used without limitation in shape, material, size, etc., as long as the container and the lid material may be commonly used in the preparation of instant food, and may be a container and a lid material that are not deformed or damaged even by heating. For example, the lid material may be a lead film, but is not limited thereto. After the sealing step, external foreign substances or microorganisms may not be introduced into the container by a natural method, so that microbial contamination may be controlled, and sterile conditions is not to be necessarily maintained in the subsequent steps.

The instant rice of the present application may be prepared by sterilizing at least one selected from the group consisting of brown rice, black rice, whole wheat, oats, barley, beans, red beans, foxtail millet, and sorghum contained in the container under conditions of a F0 value of 4 or higher; adding sterilized water or sauces to the sterilized raw ingredients; sealing the container added with the water or sauces; and heating the sealed container to a temperature of 90°C to 125°C for 10 to 25 minutes.

The mixed grains, etc. are the same as the raw ingredients contained in the instant rice, and the following description incorporates the parts.

The instant rice of the present application may be prepared by sterilizing the grains contained in the container under conditions of an F0 value of 4 or higher before sealing the container. In addition, the instant rice may be prepared through the step of adding the sterilized water or sterilized sauces to the sterilized grains. In addition, the instant rice may be prepared through the step of sealing the container added with the water or sauces. In addition, the instant rice may be prepared through the step of heating the sealed container to a temperature of 90°C to 125°C for 10 minutes to 25 minutes.

The instant rice of the present application may be prepared through the step of liquid-sterilizing the water or sauces by directly spraying steam to the water or sauces.

The liquid-sterilizing may be performed for 6 to 8 minutes by directly spraying the steam at 130°C to 140°C to the water or sauces. Specifically, the steam temperature may be a temperature in the range consisting of a lower limit selected from 130°C, 130.5°C, 131°C, 131.5°C, 132°C, and 132.5°C, and/or an upper limit selected from 140°C, 139°C, 138°C, 137°C, 136°C, 135°C, 134.5°C, 134°C, 133.5°C, 133°C, and 132.5°C. For example, the sterilization may be performed with steam at 130°C to 140°C, 130.5°C to 138°C, 131°C to 136°C, 131.5°C to 135°C, 132°C to 133°C, 132.5°C to 135°C or 130° to 132.5°C, but is not limited thereto. The sterilization of the water or sauce may be performed by spraying and injecting the steam at the above temperature directly to the water or sauce to raise the temperature, and then passing the water or sauce through a pipe that maintains heat for 6 to 8 minutes. Specifically, the sterilization time after the steam injection may be 6 minutes to 8 minutes, 6 minutes 30 seconds to 8 minutes, 6 minutes to 7 minutes 30 seconds, 6 minutes 30 seconds to 7 minutes 30 seconds, 7 minutes to 8 minutes, or 6 minutes to 7 minutes.

The liquid-sterilizing of the water or sauces may be performed using a Direct-Steam Injection (DSI) sterilization device. The liquid-sterilizing may be performed by setting the temperature and time conditions of the DSI sterilization device as described above.

In the case of instant rice containing liquid sauces with a predetermined range of viscosity and/or sugar content, a possibility of microbial contamination problems is relatively greater, and there is a possibility that quality deterioration of instant rice and/or sauces may occur when prepared according to a general preparation method of instant rice. However, the instant rice of the present application is prepared through the method described above, so that there is an advantage that colors that match the consumer's preference may be exhibited or deviations between products during mass production may not occur even while microorganisms may be completely controlled.

In the present application, the term "F value" refers to the time required to kill a specific microbial strain at a specific temperature, which may be calculated through a heat lethal time curve for the microorganism. The F value may be determined according to a Z value and a heating temperature according to a type of microorganism to be sterilized. Among them, "F0 value" may be defined as the F value when a Z value is 18°F or 10°C and the heating temperature is 250°F or 121.1°C. The Z value of 10°C is based on the value when sterilizing a standard microbial strain. The F0 value is a value that may be used as a measure of the level of sterilization in the art. Specifically, the F0 value may be measured by a probe of a sensor, which is a cumulative amount of heat transferred to a sample during the heat treatment time. For example, the F0 value may be measured by inserting the probe of the sensor into a cold point (a point where heat is transferred last within the sample or generally the center of the sample) in the sample and then checking the cumulative amount of heat to be transferred during heat application, and may be converted and calculated by setting the amount of heat corresponding to 121.1°C and 1 minute to 'F0 = 1'.

The instant rice of the present application may be prepared through the step of sterilizing the grains contained in the container under conditions of an F0 value of 4 or higher. At this time, when describing the meaning of sterilization under the condition of 'F0 value = 4' as an example, according to the definition of the F0 value, it means sterilizing standard microorganisms with Z value of 10°C to a level that may kill the microorganisms when sterilization is performed at a temperature of 121.1°C for 4 minutes. The F0 value may be calculated according to Equation 1 below.

[Equation 1]

$$F_0 = t(\text{time}) \times 10^{\frac{T(\text{Temperature}) - 121.1°C}{10°C}}$$

wherein, the unit of t (time) is minute, and the unit of T (temperature) is °C.

Specifically, the sterilizing step may be performed at an F0 value of 4 or more, 4.5 or more, 5 or more, 6 or more, 7 or more, 8 or more, 10 or more, 20 or more, 30 or more, or 40 or more, but is not limited thereto. When the sterilization is performed under a condition in the range of the F0 value or more, as instant rice is prepared through the subsequent steps, the number of microorganisms contained in the final instant rice product may fall below a threshold to exhibit a sufficient sterilization effect.

The sterilizing step may be performed using at least one method selected from the group consisting of pressurized steam sterilization, vacuum pressurized steam sterilization, and ultra-high temperature sterilization, but is not limited thereto, and any sterilization method can be used as long as it can satisfy the condition of the F0 value of 4 or more. Specifically, the sterilizing step may be performed using a pressure sterilizer (Shinwha, Japan), a vacuum pressure sterilizer (RIC device, Hisaka, Japan), or an ultra-high pressure sterilizer (Echico, Japan), but is not limited thereto. More specifically, the sterilizing step may be performed by directly applying steam to the grains, and may be performed using a vacuum pressurized steam sterilization method. The vacuum pressurized steam sterilization may be performed sequentially by vacuum, steam sterilization, reduced pressure, cooling, and gas displacement, for example, the vacuum pressurized sterilizer may be used. More specifically, the grains may be placed in the vacuum pressurized sterilizer, and then subjected subsequently to steam sterilization, reduced pressure, and vacuum cooling after the interior of the vacuum pressurized sterilizer is made in a vacuum state. The grains may be graims filled in an unsealed container. The interior of the vacuum pressurized sterilizer is made in the vacuum state before steam sterilization, thereby achieving heat transfer efficiency (rapid heat transfer) and homogeneity during steam sterilization.

The sterilizing step may be performed with steam at 120°C to 140°C for 1 to 10 minutes. Specifically, the steam temperature may be a temperature in the range consisting of a lower limit selected from 120°C, 121°C, 122°C, 123°C, 124°C, 125°C, 126°C, 127°C, 128°C, 129°C, and 130°C, and/or an upper limit selected from 140°C, 139°C, 138°C, 137°C, 136°C, 135°C, 134°C, 133°C, 132°C, 131°C, and 130°C. For example, the sterilizing step may be performed with steam at 120°C to 140°C, 121°C to 139°C, 122°C to 138°C, 123°C to 137°C, 124°C to 136°C, 125°C to 135°C, 126°C to 134°C, 127°C to 133°C, 128°C to 132°C, 129°C to 131°C, 129°C to 130°C or 130°C to 131°C, but is not limited thereto. The sterilization time may be the time in the range of a lower limit selected from 1 minute, 2 minutes, 3 minutes, 4 minutes, 4 minutes and 30 seconds, 5 minutes, 5 minutes and 30 seconds, 6 minutes, 6 minutes and 30 seconds and 7 minutes, and/or an upper limit selected from 10 minutes, 9 minutes 30 seconds, 9 minutes, 8 minutes 30 seconds, 8 minutes, 7 minutes 30 seconds, 7 minutes, 6 minutes 30 seconds, and 6 minutes. For example, the sterilization may be performed for 1 minute to 10 minutes, 2 minutes to 9 minutes, 3 minutes to 8 minutes, 4 minutes to 7 minutes, 5 minutes to 6 minutes, 5 minutes 30 seconds to 6 minutes, 5 minutes to 5 minutes 30 seconds, 6 minutes to 10 minutes, 7 minutes to 10 minutes, or 7 minutes to 9 minutes, but is not limited thereto, and the sterilization time may vary within the above range depending on the volume of grains to be sterilized. For example, when preparing the instant rice in a volume suitable for one meal per person, the sterilization time may be generally 4 minutes to 6 minutes, and when preparing the instant rice in a larger volume than the volume for one meal per person, the sterilization time may be increased to a range of 7 minutes to 10 minutes and may be appropriately changed depending on the volume.

In addition, the sterilizing step may be performed by repeatedly contacting the grains 5 to 10 times with steam at 140°C to 155°C for 3 to 10 seconds. Specifically, the steam temperature may be in the range consisting of a lower limit selected from 140°C, 142°C, 145°C, and 147°C and/or an upper limit selected from 155°C, 153°C, 150°C, and 148°C. For example, the sterilization may be performed with steam at 140°C to 155°C, 142°C to 153°C, 145°C to 150°C, 145°C to 148°C, 147°C to 150°C or 147°C to 148°C, but is not limited thereto. The steam contacting time may be the time consisting of a lower limit selected from 3 seconds, 4 seconds, 5 seconds and 6 seconds and/or an upper limit selected from 10 seconds, 9 seconds, 8 seconds and 7 seconds. For example, the steam contacting time may be 3 seconds to 10 seconds, 4 seconds to 9 seconds, 5 seconds to 8 seconds, 6 seconds to 8 seconds, 5 seconds to 7 seconds, or 6 seconds to 7 seconds, but is not limited thereto. The contacting of the grains with the steam may be repeated 5 to 10 times, 6 to 9 times, 6 to 8 times, 7 to 9 times, or 7 to 8 times.

The instant rice of the present application may be prepared by further including immersing the grains in water before including the grains in the container. The immersing step may include washing the grains with water, and for example, the grains may be immersed for 20 minutes to 80 minutes by adding 200 parts by weight to 300 parts by weight of water with respect to total 100 parts by weight of the washed grains, but it is not limited thereto. The immersing step may be performed in the same manner as a process of soaking grains in water when generally cooking and preparing rice.

After the immersing step, a step of removing water may be further performed before containing the grains in the container. As a result of removing water, before the sterilizing step, 0 to 10 parts by weight of water based on 100 parts by weight of the grains may be included together in the container.

The instant rice of the present application is subjected to a step of adding sterilized water or sterilized sauces to the sterilized grains after the sterilizing step, wherein the amount of sterilized water to be added may be used without limitation as long as the amount is within the range generally used when preparing Bap. For example, after water is added, sterilized water may be added so that the amount of water may be added to be 30 parts by weight to 120 parts by weight based on 100 parts by weight of grains, specifically 30 parts by weight to 110 parts by weight, 40 parts by weight to 105 parts by weight, 50 parts by weight to 100 parts by weight, 60 parts by weight to 95 parts by weight, or 70 parts by weight to 90 parts by weight. Considering the amount of water contained in the container as a result of immersing the grains in water and then removing the water, the amount of water may be appropriately controlled and added so that the amount of water within the range may be ultimately contained in the container.

The instant rice of the present application may be prepared without a cooking step. Specifically, the instant rice may be prepared without a cooking step after the sterilizing step and before the sealing step. The cooking step generally refers to a process of heating the grains of Bap in the process of preparing Bap, and for example, may be a step of heating to 90°C to 120°C. Since the method for the preparation of the instant rice of the present application does not include the cooking step, there is an effect capable of reducing the number of times of heating the grains and preventing the quality of the instant rice from being deteriorated by heating. In addition, since microorganisms may be introduced into the container before sealing the container, sterile conditions need to be observed to prevent microbial contamination, but when the cooking step is not included before the sealing step, there is an advantage that a process that have to comply with sterile conditions may be shortened or the time to be maintained in sterile conditions may be reduced. Accordingly, there is an effect capable of reducing the cost of creating sterile conditions and lowering the possibility of microbial contamination.

The instant rice of the present application may be prepared without applying heat 90°C or higher before the sealing step after the sterilization step. Specifically, the heat of 90°C or higher, 96°C or higher, a97°C or higher, 98°C or higher, 99°C or higher, 100°C or higher, 102°C or higher, 105°C or higher, 110°C or higher, 120°C or higher, 90°C to 120°C, 97°C to 117°C, 99°C to 120°C, 100°C to 117°C, 105°C to 115°C, or 115°C to 120°C, but it is not limited thereto. Since the instant rice of the present application is prepared without the step of heating in the above temperature range before the sealing step, there is an effect capable of reducing the number of times of heating the grains and preventing the quality of the instant rice from being deteriorated by heating. In addition, since microorganisms may be introduced into the container before sealing the container, sterile conditions need to be observed to prevent microbial contamination, but when the step of heating in the above temperature range is not included before the sealing step, there is an advantage that the time to be maintained in sterile conditions may be reduced. Accordingly, there is an effect capable of reducing the cost of creating sterile conditions and lowering the possibility of microbial contamination.

The meaning of "not applying heat" is a concept of including not only not applying heat in the above temperature range at all, but also temporarily applying heat in the temperature range for a short period of time ultimately to the same level as not applying heat according to common sense in the art. For example, even if the temporary heating is performed, it is included in the scope of the present application so long as no significant sterilization effect occurs or no change in Bap quality occurs. For example, the not applying heat may include applying heat in the above temperature range within 1 second, 2 seconds, 3 seconds, 5 seconds, 10 seconds, or 20 seconds, and may also include applying heat in the above temperature range two times or more for a short period of time.

The instant rice of the present application may be prepared by maintaining the temperature of 89°C or less before the sealing step after the sterilization step. Specifically, the temperature may be maintained at 89°C or lower, 88°C or lower, 87°C or lower, 85°C or lower, 80°C or lower, 75°C or lower, 70°C or lower, 10°C to 89°C, 15°C to 88°C, 20°C to 85°C, 25°C to 80°C, 20°C to 70°C, 20°C to 60°C or 20°C to 50°C, but is not limited thereto. In the instant rice of the present application, as the temperature in the range is maintained before the sealing step, there is an effect capable of reducing the number of times of heating the grains and preventing the quality of the instant rice from being deteriorated due to heating. In addition, since microorganisms may be introduced into the container before sealing the container, sterile conditions need to be observed to prevent microbial contamination, but when the temperature in the range is maintained before the sealing step, there is an advantage that the time to be maintained in sterile conditions may be reduced. Accordingly, there is an effect capable of reducing the cost of creating sterile conditions and lowering the possibility of microbial contamination.

The meaning of "maintaining the temperature" is a concept including not only the case where the temperature in the above range is continuously maintained without interruption in time, but also the case where a temperature condition higher than the above temperature range is temporarily given for a short period of time, that is, the concept including the cases where the above temperatures are continuously maintained, and are ultimately the same under the technical common sense in the art. For example, even if the temperature condition higher than the above temperature range is temporarily given, it is included in the scope of the present application so long as no significant sterilization effect occurs or no change in the quality of Bap occurs. For example, the temperature condition higher than the above temperature range may be given for the time within 1 second, within 2 seconds, within 3 seconds, within 5 seconds, within 10 seconds, or within 20 seconds, and the temperature condition higher than the above temperature range may be given two times or more for a short period of time.

The instant rice of the present application may be prepared by performing the sterilizing step to the sealing step while the sterile conditions are maintained. Since the container included with sterilized grains and the like may be contaminated from external biological particles such as microorganisms and other non-living particles before sealing, there is a need to perform each process under controlled conditions of the contaminant particles floating in the air. The method of maintaining the sterile conditions may be applied without limitation as long as it is a method and condition commonly applied to the production of food in the art, and specifically, the sterile conditions commonly applied to the preparation of processed foods, instant foods, retort foods, etc. may be applied. The sterile conditions may be maintained by performing each step in a clean room or clean booth, and for example, the process from the completion of the sterilization step to the start of the sealing step may be performed in a tunnel-shaped booth. In this case, the inflow of microorganisms may be prevented through clean air generated from a clean air generator (for example, a HEPA filter) installed in the booth, and the inside of the booth may be maintained at positive pressure.

The instant rice of the present application may be prepared by heating the sealed container to a temperature of 90°C to 125°C for 10 minutes to 25 minutes. Specifically, the heating temperature may be a temperature in the range consisting of a lower limit selected from 90°C, 91°C, 92°C, 93°C, 94°C, 95°C, 96°C, 97°C, 98°C, 99°C, 100°C, 105°C, 107°C, 110°C, 112°C and 115°C and/or an upper limit selected from 125°C, 124°C, 123°C, 122°C, 121°C, 120°C, 119°C, 118°C, 117°C, 116°C and 115°C. For example, the heating may be performed at a temperature of 90°C to 125°C, 91°C to 125°C, 92°C to 124°C, 93°C to 124°C, 94°C to 123°C, 95°C to 123°C, 95° C to 122°C, 95°C to 121°C, 96°C to 121°C, 97°C to 121°C, 100°C to 120°C, 105°C to 119°C, 107°C to 118°C, 110°C to 115°C, 110°C to 118°C, 110°C to 116°C, or 112°C to 116°C, but is not limited thereto. The sterilization time may be a time in the range consisting of a lower limit selected from 10 minutes, 11 minutes, 12 minutes, 13 minutes, 14 minutes, 15 minutes, 16 minutes, 17 minutes, 18 minutes, 19 minutes and 20 minutes, and/or an upper limit selected from 25 minutes, 24 minutes, 23 minutes, 22 minutes, 21 minutes, and 20 minutes. For example, the heating may be performed for 10 minutes to 25 minutes, 11 minutes to 24 minutes, 12 minutes to 23 minutes, 15 minutes to 22 minutes, 17 minutes to 21 minutes, 19 minutes to 20 minutes, 20 minutes to 21 minutes, 12 minutes to 17 minutes, 13 minutes to 16 minutes, 18 minutes to 23 minutes, 19 minutes to 22 minutes, or 19 minutes to 21 minutes, but is not limited thereto. The temperature range and the time range may vary depending on the types of grains.

When the heating is performed according to the temperature range and the time, there is an advantage of enabling more complete microbial control by exhibiting additional sterilization effects. In addition, through the heating process under the conditions, the instant rice of the present application reaches a level similar to that of Bap prepared through the preparing process of conventional Bap to have the quality of Bap suitable for eating, and prevent the deterioration of the quality of Bap due to an excessive heating condition, thereby preparing instant rice with excellent quality.

The number of microorganisms in the grains measured after the heating step may be 0 cfu/ml. In the grains included in the instant rice prepared by the method for the preparation of instant rice of the present application, all general bacteria and heat-resistant bacteria are killed, so that the number of microorganisms may be 0 cfu/ml. Accordingly, the instant rice of the present application has an advantage of exhibiting a sufficient sterilization effect without deteriorating the quality of the grains included in the instant rice.

In other words, the instant rice of the present application may be easy to cook and store as an instant food, and may have texture and taste qualities similar to Bap prepared through a general rice recipe at home or in a restaurant. In addition, even if grains that are susceptible to microbial contamination or not easy to sterilize are used, it is possible to prepare an instant rice in which the number of microorganisms may be controlled through sufficient sterilization and the quality of Bap does not deteriorate due to sterilization.

The temperature conditions of the heating step may be lower than the heating temperature for conventional retort sterilization, and specifically, may be lower than a retort sterilization heating temperature commonly used in preparing conventional instant rice. In addition, the temperature conditions of the heating step may be higher than the heating temperature during 'steaming', which is performed to transfer heat to the inside of the food in the general cooking process of Bap.

The heating step may be performed in a general retort apparatus by setting the temperature and time conditions to the above range, but is not limited thereto.

The instant rice of the present application may be prepared by further including a step of cooling and drying after the heating step, and may be prepared by further including inspecting the appearance and condition of the prepared instant rice and/or packaging one or more instant rice. The cooling step may be cooling by natural wind, but is not limited thereto, and the inspecting step may be visual inspection or sampling inspection, but is not limited thereto.

[Advantageous Effects]

According to the present application, even if instant rice is prepared using grains that are susceptible to microbial contamination and are difficult to sterilize, the rice quality (hardness, bursting phenomenon of grain surfaces, etc.) may not be damaged by sterilization even while lowering the number of microorganism to a threshold or less through sufficient sterilization and the problem of reduced quality by strict sterilization does not occurs, and thus, it is possible to provide instant rice having improved quality with taste, nutrition, texture, etc. of hot pot rice.

In addition, compared to a general method for the preparation of instant rice, there are advantages in terms of cost and microbial safety by using a new preparing principle to minimize changes in quality by reducing the number of heating times, and to simplify the time or steps to be performed by maintaining sterile conditions.

However, the effects of the present application are not limited to the above effects, and other effects not mentioned will be clearly understood by those skilled in the art from the following description.

[Description of Drawings]

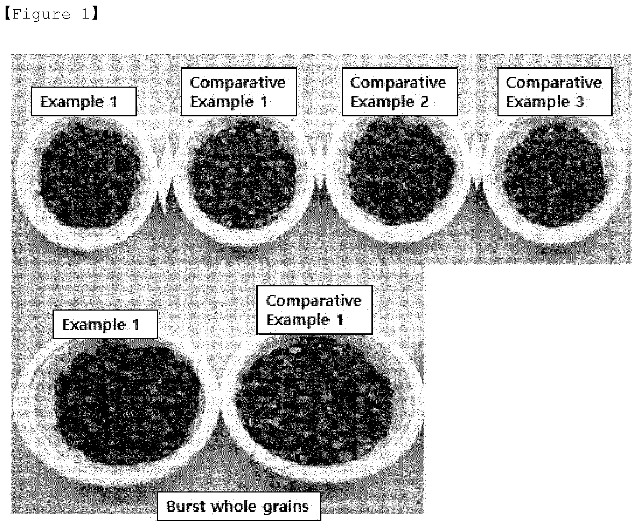

FIG. 1 is a diagram of comparing the rice grain appearances of whole grain rice of the present application (Example 1) and whole grain rice of Comparative Examples 1 to 3, wherein it can be confirmed that in the instant rice of Comparative Example 1, many whole grains with burst surfaces are found, but in the instant rice of Example 1, almost no surface bursting phenomenon occurs.

[Best Mode]

Hereinafter, the present application will be described in detail by the Examples. However, the following Examples specifically illustrate the present application, and the contents of the present application are not limited by the following Examples.

**<Examples and Comparative Examples>**

**Example 1: Whole grain rice**

Whole grain rice of Example 1 was prepared using various whole grains other than white rice as raw ingredients, according to the method for preparing instant rice of the present application. Specifically, non-glutinous brown rice, glutinous brown rice, black rice, whole wheat, and oats were used as raw ingredients, and a mixing ratio of each raw ingredient was listed in Table 1 below. The raw ingredients were washed with water, immersed, and then contained in a container. The contained container was moved to an RIC device (manufactured by Hisaka Seisakusho Co., Ltd.), and a steam pressure sterilization was performed at a temperature of 130°C for 5 minute and 30 seconds in a vacuum state. The sterilization condition corresponds to a sterilization condition in which an F0 value is 4 or more. After the sterilization of the raw ingredients was completed, sterilized water was added to be finally mixed in a ratio according to Table 1 below.

[Table 1]

| Raw ingredients | Mixing ratio (%) |
| --- | --- |
| Non-glutinous brown rice | 8.05 |
| Glutinous brown rice | 14.09 |
| Black rice | 6.04 |
| Whole wheat | 6.04 |
| Oats | 6.04 |
| Water | 59.74 |
| Total | 100.00 |

After adding water to the container, the container was sealed with a lid material to prevent external microorganisms or foreign substances from being introduced into the container. The sealed container was moved to a retort sterilization device and heated by setting conditions of a temperature of 115°C for 20 minutes to prepare an instant rice of Example 2. The temperature and time conditions of the device correspond to relatively less strict conditions compared to conventional retort sterilization conditions.

**Comparative Examples 1 to 3: Whole grain rice**

Whole grain rice of Comparative Examples 1 to 3 was prepared using raw ingredients mixed in the mixing ratio according to Table 1 above. An instant rice was prepared in the same manner as the method for preparing the whole grain rice in Example 1 above, except that some conditions were varied.

The instant rice of Comparative Example 1 was completed by performing the same method as in Example 1 until the container sealing step, except as prepared by steaming the sealed container at a temperature of 95°C or lower, specifically heating at a temperature of 85°C for 20 minutes, instead of the heating step of Example 1.

The instant rice of Comparative Example 2 was prepared under a conventional retort heat sterilization condition by performing the same method as in Example 1 until the container sealing step, except as prepared by heating the sealed container in a retort sterilization device at a temperature of 123°C for 18 minutes, instead of the heating step of Example 1.

In Comparative Example 3, after performing a steam pressure sterilization at 130°C for 5 minute and 30 seconds in the same manner as in Example 1, a cooking process was further performed by adding and heating sterilized water to a temperature of 98°C for 35 minutes again. This corresponds to a process performed in a conventionally known instant rice preparing process. In Comparative Examples 3, after the cooking step, by sealing and heating the container in a retort sterilization device at 115°C for 20 minutes, an instant rice was prepared through the same heating step as in Example 1.

**[Experimental Example 1]**

**[1-1] Comparison of chromaticity and appearance of whole grain rice**

The instant rice (whole grain rice) of Example 1, and Comparative Examples 1 to 3, prepared with whole grains such as brown rice, black rice, whole wheat, and oats as raw ingredients, was heated for 2 minutes using a microwave (700 W), and then the lid material was removed, and the colors thereof were measured, and the appearances thereof were compared. For the colors, L, a, and b values were measured using an instrument manufactured by Konica Minolta company, and each value was measured three times, and average values thereof were shown in Table 2 below.

[Table 2]

|  | L | a | b |
|---|---|---|---|
| Example 1 | 22.62 | 5.42 | 4.34 |
| Comparative Example 1 | 22.16 | 5.28 | 3.97 |
| Comparative Example 2 | 22.67 | 5.92 | 5.03 |
| Comparative Example 3 | 22.76 | 6.21 | 5.46 |

As a result, as can be seen in Table 2, the instant rice of Example 1 of the present application was measured to have a color similar to that of the instant rice of other Comparative Examples 1 to 3. Unlike the experimental results of white rice, there was no significant difference in color, including L value, in the whole grain rice, but as a result of observing the appearance, in the surface of the instant rice in Comparative Example 1, more grins, whose surfaces were burst and thus appeared white, were shown (FIG. 1). The surface bursting was determined based on whether 10% or more of the endosperm part of the grain was exposed compared to the total surface area. This is expected to be a result that the temperature conditions were too low in the method for preparing the instant rice in Comparative Example 1, and thus the outer skin of the grain was not softened, but only the interior absorbed moisture and swelled. In contrast, in the instant rice of Example 1 prepared according to the method for the preparation of the instant rice of the present application, the same phenomenon as Comparative Example 1 was not observed and thus, superior features in appearance quality were shown and it was indirectly confirmed that the whole grain rice was sufficiently cooked.

## [1-2] Analysis of cooked rice taste of whole grain rice

With respect to instant rice (whole grain rice) of Example 1 and Comparative Examples 1 to 3 heated using a microwave, a cooked rice taste value of each instant rice was shown in Table 3 below by measuring the appearance, hardness, glutinousness, balance, and palatability of the rice grains using a taste meter (Tensipresser My Boy 2 system, Taketomo Electric Co., Japan).

[Table 3]

|  | Appearance | Hardness | Glutinousness | Balance | Palatability |
|---|---|---|---|---|---|
| Example 1 | 4.4 | 9.8 | 4.8 | 2 | 43 |
| Comparative Example 1 | 3.5 | 9.8 | 4.7 | 1.2 | 39 |
| Comparative Example 2 | 3.7 | 9.8 | 4.7 | 1.4 | 40 |
| Comparative Example 3 | 3.8 | 9.8 | 4.7 | 1.4 | 40 |

As a result, it was confirmed that the instant rice of Example 1 prepared through the preparing method of the present application was measured to have the highest palatability value in all of appearance, hardness, glutinousness, and balance values, compared with the instant rice of the Comparative Examples prepared by other methods.

## [1-3] Analysis of physical properties of whole grain rice

With respect to the instant rice (whole grain rice) of Example 1 and Comparative Examples 1 to 3 heated using a microwave, the hardness, elasticity, adhesiveness and glutinousness were measured using a physical property analyzer (Tensipresser Analyzer, MyBoy, TAKETOMO Electric Incorporated).

Specifically, to measure the physical properties, texture profile analysis (TPA) was performed using a physical property analyzer, and a TPA curve obtained after 6 bites was used. Specifically, the load applied to the plunger was measured by placing each sample in a holder of a physical property analyzer, moving a 30 mm-high plunger at a constant force and speed of 2.0 mm/s to apply the force to the sample surface, and applying 24% compression of the sample thickness two times, 46% compression two times and 92% compression two time continuously and vertically. The hardness was measured by a peak value when the plunger applies 92% compression of the sample thickness, which represents the force required to chew and crush the Bap. The elasticity was measured by dividing a curve area at 92% compression by a curve area at 240 compression, which means that the higher the elasticity value, the higher the chewed elasticity of the Bap. The adhesiveness may be measured by a negative peak value when the plunger applies 92% compression to the sample, which represents the force at the moment of removing the plunger stuck to the sample, and means that the larger the measured value, the higher the adhesiveness. The glutinousness may be measured by a negative area when the plunger applies 92% compression to the sample, which represents a sustained sticking force. Each value was repeatedly measured 5 times, and then the average values thereof are shown.

[Table 4]

|  | Hardness | Elasticity | Adhesion | Glutinousness |
|---|---|---|---|---|
| Example 1 | 26.32 | 34.17 | 29.77 | 23.49 |
| Comparative Example 1 | 23.95 | 39.14 | 26.36 | 22.70 |
| Comparative Example 2 | 14.22 | 27.30 | 32.25 | 23.25 |
| Comparative Example 3 | 20.06 | 32.99 | 29.49 | 21.40 |

As a result, as can be seen in Table 4 above, the instant rice of Example 1 was measured to have a hardness value higher than that of the instant rice of Comparative Examples 1 to 3. The hardness was an important physical property in determining the texture of rice, and in the instant rice of Comparative Examples 2 and 3, the hardness was measured to be low as excessive heat was applied, and in the instant rice of Comparative Example 1, the level of heat applied was low, but as confirmed in Experimental Example 1 and FIG. 1, it is expected that the bursting phenomenon of grains occurs and hardness is lowered. In contrast, in the case of Example 1 prepared according to the method for preparing the instant rice of the present application, even though the sterilization was performed through sufficient heating, it was confirmed that the hardness was not lowered and the rice grains remained intact to maintain the quality.

### [1-4] Sensory evaluation of whole grain rice

The instant rice (white rice Bap) of Example 1 and Comparative Examples 1 to 3 was heated using a microwave, and then an evaluation on various kinds of sensory qualities was performed by trained professional panels. The sensory quality was evaluated by color preference, taste/flavor strength, overall taste preference, texture preference, and glutinousness preference of the instant rice, and the result is shown in Table 5 below. The evaluation criteria for the sensory quality are as follows.

[Evaluation criteria]

Color preference: Provided that 1 point is a minimum value and 5 points are a maximum value, the higher the color preference, the higher the score.
Taste/flavor strength: Provided that 1 point is a minimum value and 5 points are a maximum value, it means that the higher the taste/flavor strength, the higher the score.
Overall taste preference: As it is an item to evaluate the overall taste, provided that 1 point is a minimum value and 5 points are a maximum value, it means that the better the overall taste preference, the higher the score.
Texture preference: Provided that 1 point is a minimum value and 5 points are a maximum value, it means that the higher the texture preference, the higher the score.
Glutinousness preference: Provided that 1 point is a minimum value and 5 points are a maximum value, it means that the higher the glutinousness preference, the higher the score.

[Table 5]

|  | Color preference | Taste/ flavor strength | Overall taste preference: | Texture preference | Glutinousness preference |
|---|---|---|---|---|---|
| Example 1 | 4.3 | 1.3 | 4.0 | 4.0 | 4.0 |
| Comparative Example 1 | 3.0 | 1.3 | 2.7 | 2.7 | 2.7 |
| Comparative Example 2 | 4.1 | 1.3 | 4.0 | 4.0 | 3.7 |
| Comparative Example 3 | 3.9 | 1.3 | 3.3 | 3.2 | 3.7 |

As a result, as compared with whole grain rice of the Comparative Examples, in the whole grain rice of Example 1, color preference, texture preference, and glutinousness preference were measured at the highest levels, and the taste/flavor strength was also measured at similar levels in Example 1 and the Comparative Examples to have no difference. Accordingly, it was confirmed that the whole grain rice of Example 1 prepared according to the preparing method of the present application exhibited superior sensory quality to Bap prepared through other methods.

**[Experimental Example 2]**

**Confirmation of nutritional ingredients of whole grain rice**

The nutritional raw ingredients contained in the whole grain rice prepared in Example 1 were measured and confirmed. Based on finished products of whole grain rice, the contents of calories, carbohydrates, proteins, fats, sugars, saturated fat, trans fat, cholesterol, sodium, ash and dietary fibers thereof were measured using a usual measurement method according to the Food Code. For example, the proteins were measured by a protein analyzer analysis method in the Food Code, and the dietary fibers were measured by a total dietary fiber analysis method in the Food Code. The nutritional materials of the instant rice were shown in Table 6 below.

Even if the instant rice of the present application was prepared using only mixed grains without using white rice, sufficient sterilizing force and texture may be maintained, and thus, the protein content and dietary fiber content in the instant rice of the present application were able to be maintained at higher levels than the protein and dietary fiber contents in conventional instant rice.

[Table 6]

| Instant rice | | Whole grain rice |
|---|---|---|
| | | Content per 100 g |
| Calorie | kcal/100g | 158.82 |
| carbohydrate | g/100g | 32.85 |
| Protein | g/100g | 4.35 |
| Fat | g/100g | 1.12 |
| Sugars | g/100g | 0.32 |
| Saturated fat | g/100g | 0.26 |
| Trans fat | g/100g | 0.01 |
| Cholesterol | g/100g | 0.00 |
| Sodium | mg/100g | 0.64 |
| Ash | g/100g | 0.59 |
| Dietary fiber | g/100g | 3.51 |

**[Experimental Example 3]**

**Confirmation of the number of microorganisms in whole grain rice**

In order to confirm whether complete sterilization was performed in the whole grain rice product of the present application, the number of microorganisms contained in the raw ingredients or product was measured at each step.

With respect to the whole grain rice according to Example 1, first, the number of general bacteria and the number of heat-resistant bacteria for each of the raw ingredients were measured. The number of each bacterium was measured in non-glutinous rice, glutinous rice, chestnuts, pumpkin seeds, raisins and pine nuts, and the number of microorganisms was measured in a mixed solid material sample mixed with the raw ingredients.

As a result, as shown in Table 7 below, it was measured that general bacteria were present above a certain level in the raw ingredients before the sterilization step, and at least 550,000 cfu/ml of general bacteria were present in the solid material mixture of the raw ingredients for preparing the instant rice.

[Table 7]

| Measuring sample | | General bacteria (cfu/ml) | Heat-resistant bacteria (cfu/ml) |
|---|---|---|---|
| Non-glutinous brown rice | | 4,200,000 | 0 |
| Glutinous brown rice | | 420,000 | 0 |
| Black rice | | 1,600,000 | 0 |
| Whole wheat | | 1,800 | 0 |
| Oats | | 11,000 | 0 |
| Mixed solid material | Sample 1 | 550,000 | 0 |
| | Sample 2 | 1,100,000 | 0 |
| | Sample 3 | 1,400,000 | 0 |

The raw ingredients were included in the container, and then the steam pressure sterilization was performed at a temperature of 130°C for 5 minutes and 30 seconds in an RIC device during the process of preparing the whole grain rice according to Example 1, and then a sterilizing effect was confirmed through a microbiology challenge test (MCT). The MCT is a method of determining whether a product has the process and distribution stability by artificially inoculating microorganisms and observing changes in order to check whether target bacteria are controlled during the actual process of the product. As general bacteria, an orange capsules (MesaLabs SASU-302) containing $10^6$ CFU/ml of Bacillus subtilis (ATCC 5230), which died under a condition of F0 of about 4 or less, was used, and as heat-resistant bacteria, a purple capsule (MesaLabs SA-608) containing $10^6$ CFU/ml of Geobacillus stearotrhermophilus (ATCC 7953), which died at an F0 of about 21 or less, was used. The raw ingredients sterilized with the RIC device using the capsules were cultured for up to 48 hours at a temperature of 35°C for the orange capsule and 55 to 60°C for the purple capsule, respectively, and then color changes were confirmed. If there was no color change, it was determined to be negative, and if the color changed to yellow, it was determined to be positive (Table 8). As a result, it was confirmed that as a result of steam pressure sterilization using the RIC device, all microorganisms that had been present in the raw ingredients before sterilization were killed to exhibit a sufficient sterilization effect.

[Table 8]

| Measuring sample | Sample name | MCT |
|---|---|---|
| RIC sterilized sample 1 | 4-carriage 1-stage 35°C | Negative |
| RIC sterilized sample 2 | 4-carriage 1-stage 55°C | Negative |
| RIC sterilized sample 3 | 4-carriage 7-stage 35°C | Negative |
| RIC sterilized sample 4 | 4-carriage 7-stage 55°C | Negative |
| RIC sterilized sample 5 | 4-carriage 12-stage 35°C | Negative |
| RIC sterilized sample 6 | 4-carriage 12-stage 55°C | Negative |

Furthermore, after the steam pressure sterilization, a finished instant rice product was prepared through water addition, sealing and additional heating processes, and bacterial growth experiments were conducted on the finished product. In the bacterial growth experiments, the instant rice product was stored at 35°C for 10 days, and then sampled to determine the growth of general bacteria and heat-resistant bacteria according to a common measurement method in the art (based on the bacterial growth experiments according to the general test method of the Ministry of Food and Drug Safety), each finished product sample was preserved in an incubator at a temperature of 35 to 37°C for at least 10 days, and then a specimen obtained from the sample was homogenized with a diluent and cultured in a culture medium at 35 to 37°C for 45 to 51 hours, and then bacterial growth was measured. As a result, as shown in Table 9 below, since no bacterial growth was observed in all 12 instant rice samples, which were shown as negative, despite the presence of a large amount of microorganisms in the raw ingredients, it was confirmed that all microorganisms were killed in the instant rice prepared through the preparing method of the present application through sufficient sterilization.

[Table 9]

| Measuring sample | Sample name (carriage-stage-number) | Bacterial growth |
| --- | --- | --- |
| Finished product sample 1 | 3-2-1 | Negative |
| Finished product sample 2 | 3-2-1 | Negative |
| Finished product sample 3 | 3-2-1 | Negative |
| Finished product sample 4 | 3-2-7 | Negative |
| Finished product sample 5 | 3-2-7 | Negative |
| Finished product sample 6 | 3-2-7 | Negative |
| Finished product sample 7 | 3-2-14 | Negative |
| Finished product sample 8 | 3-2-14 | Negative |
| Finished product sample 9 | 3-2-14 | Negative |
| Finished product sample 10 | 3-3-1 | Negative |
| Finished product sample 11 | 3-3-1 | Negative |
| Finished product sample 12 | 3-3-1 | Negative |

Hereinabove, representative Examples of the present application have been exemplarily described, but the scope of the present application is not limited to the specific Examples as described above, and can be changed appropriately by those of ordinary skill in the art within the scope described in the appended claims of the present application.

**Claims**

1.  An instant rice, comprising:

    a sealed container; and
    a multi-grain rice prepared with mixed grains included in the container,
    wherein the mixed grains comprise one or more selected from the group consisting of brown rice, black rice, whole wheat, oats, barley, beans, red beans, foxtail millet, and sorghum,
    the multi-grain rice is comprised in an amount of 90 parts by weight or more based on 100 parts by weight of the contents contained in the container, and
    the number of microorganisms in the instant rice is negative within a shelf life.

2.  The instant food of claim 1, wherein the mixed grains comprise at least one selected from the group consisting of whole wheat and oats, and
    among the whole wheat or oats in the multi-grain rice, the whole wheat or oats with unburst surfaces are contained in an amount of 10 parts by weight or less, based on 100 parts by weight of the whole wheat or oats in the entire multi-grain rice.

3.  The instant food of claim 1, wherein the mixed grains comprise brown rice and black rice, and
    the brown rice is at least one selected from the group consisting of non-glutinous brown rice and glutinous brown rice.

4.  The instant food of claim 1, wherein the mixed grains do not comprise white rice.

5.  The instant food of claim 1, wherein at least one selected from the group consisting of the whole wheat and barley is contained in an amount of 5 to 15 parts by weight based on 100 parts by weight of the contents contained in the container.

6.  The instant food of claim 1, wherein the instant rice comprises dietary fibers in an amount of 3 parts by weight to 7 parts by weight based on 100 parts by weight of the contents contained in the container.

7. The instant food of claim 1, wherein the instant rice comprises proteins in an amount of 3.5 parts by weight to 10 parts by weight based on 100 parts by weight of the contents contained in the container.

8. The instant food of claim 1, wherein the number of microorganisms in the instant rice is 0 CFU/ml when measured at the time of 9 months or less after the preparation of instant rice.

9. The instant food of claim 1, wherein the mixed grains have the number of microorganisms of $10^2$ cfu/ml to $10^8$ cfu/ml before sterilization.

10. The instant food of claim 1, wherein the instant rice is heated in a 700 W microwave for 1 minute to 3 minutes, and then the multi-grain rice contained in the container has one or more of the following physical properties measured using a physical property analyzer:

    (i) hardness of the multi-grain rice of 25 to 35;
    (ii) elasticity of the multi-grain rice of 33 to 37;
    (iii) adhesiveness of the multi-grain rice of 29.5 to 31; and
    (iv) glutinousness of the multi-grain rice of 23.3 to 25.

11. The instant food of claim 1, wherein the instant rice is prepared by sterilizing the grains contained in the container under the condition of an F0 value of 4 or higher before sealing the container.

12. The instant food of claim 11, wherein the instant rice is prepared by heating the sealed container to a temperature of 90°C to 125°C for 10 minutes to 25 minutes.

13. The instant food of claim 11, wherein the instant rice is prepared so that heat of 90°C or higher is not applied after the sterilizing and before sealing of the container.

【Figure 1】

## INTERNATIONAL SEARCH REPORT

| | International application No. |
|---|---|
| | **PCT/KR2022/006118** |

### A. CLASSIFICATION OF SUBJECT MATTER

**A23L 7/196**(2016.01)i; **A23L 3/10**(2006.01)i; **A23L 3/02**(2006.01)i; **B65B 55/02**(2006.01)i; **B65B 25/00**(2006.01)i

According to International Patent Classification (IPC) or to both national classification and IPC

### B. FIELDS SEARCHED

Minimum documentation searched (classification system followed by classification symbols)

A23L 7/196(2016.01); A23L 1/10(2006.01); A23L 7/10(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 즉석밥(instant rice), 통곡물(whole grain), 귀리(oat), 현미(brown rice)

### C. DOCUMENTS CONSIDERED TO BE RELEVANT

| Category* | Citation of document, with indication, where appropriate, of the relevant passages | Relevant to claim No. |
|---|---|---|
| X | KR 10-1520270 B1 (NONGSHIM CO., LTD.) 18 May 2015 (2015-05-18)<br>See claims 1 and 3-4; and paragraph [0023]. | 1-11 |
| Y | | 12-13 |
| Y | JP 5794299 B2 (SATAKE CORPORATION) 14 October 2015 (2015-10-14)<br>See paragraphs [0015] and [0041]. | 12-13 |
| A | KR 10-0877474 B1 (CJ CHEILJEDANG CORPORATION) 07 January 2009 (2009-01-07)<br>See entire document. | 1-13 |
| A | JP 2019-076001 A (TAIYO KAGAKU CO., LTD.) 23 May 2019 (2019-05-23)<br>See entire document. | 1-13 |
| A | JP 2018-191576 A (AJI KIKKOU KK) 06 December 2018 (2018-12-06)<br>See entire document. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2022** | **18 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
| --- |
| **PCT/KR2022/006118** |

| Patent document cited in search report | | | Publication date (day/month/year) | Patent family member(s) | | | Publication date (day/month/year) |
| --- | --- | --- | --- | --- | --- | --- | --- |
| KR | 10-1520270 | B1 | 18 May 2015 | KR | 10-2015-0013993 | A | 06 February 2015 |
| JP | 5794299 | B2 | 14 October 2015 | CN | 103547169 | A | 29 January 2014 |
| | | | | ES | 2443865 | A2 | 20 February 2014 |
| | | | | ES | 2443865 | B2 | 27 April 2015 |
| | | | | ES | 2443865 | R1 | 10 March 2014 |
| | | | | KR | 10-1832722 | B1 | 27 February 2018 |
| | | | | KR | 10-2014-0047605 | A | 22 April 2014 |
| | | | | US | 2014-0109774 | A1 | 24 April 2014 |
| | | | | US | 9854825 | B2 | 02 January 2018 |
| | | | | WO | 2012-140700 | A1 | 18 October 2012 |
| KR | 10-0877474 | B1 | 07 January 2009 | CN | 101366481 | A | 18 February 2009 |
| | | | | JP | 2009-005674 | A | 15 January 2009 |
| | | | | JP | 4829851 | B2 | 07 December 2011 |
| | | | | US | 2009-0004361 | A1 | 01 January 2009 |
| | | | | US | 7931927 | B2 | 26 April 2011 |
| JP | 2019-076001 | A | 23 May 2019 | None | | | |
| JP | 2018-191576 | A | 06 December 2018 | JP | 6607645 | B2 | 20 November 2019 |

Form PCT/ISA/210 (patent family annex) (July 2019)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150105819